# EUROPÄISCHE PATENTSCHRIFT

(11) **EP 0 639 425 B1**
(45) Veröffentlichungstag und Bekanntmachung des Hinweises auf die Patenterteilung: **12.02.1997**
(21) Anmeldenummer: 94202348.2
(22) Anmeldetag: 18.08.1994
(51) Int. Cl.: B23K 26/00

(54) **Verfahren zum Befestigen eines Gerätebauteiles**
Process for fixing a device unit
Procédé de fixation d'un composant d'appareil

(30) Priorität: 21.08.1993 DE 4328211
(43) Veröffentlichungstag der Anmeldung: 22.02.1995
(73) Patentinhaber: Philips Patentverwaltung GmbH, 22335 Hamburg (DE); PHILIPS ELECTRONICS N.V., 5621 BA Eindhoven (NL)
(72) Erfinder: Gumbert, Hans, c/o Philips Patentverw. Gmbh, D-20097 Hamburg (DE)
(74) Vertreter: von Laue, Hanns-Ulrich, Dipl.-Ing.

(56) Entgegenhaltungen:
- EP-A- 0 343 661
- DE-A- 2 628 687
- FR-A- 2 370 887

## Beschreibung

Die Erfindung bezieht sich auf ein Verfahren zum Befestigen eines Gerätebauteiles in einem Loch einer metallischen Basisplatte, wobei aneinander grenzende Randbereiche des Loches und des Bauteiles durch Aufschmelzen von benachbarten Materialbereichen von Basisplatte und Bauteil mittels eines Strahles parallel gebündelten Lichtes (Laserlicht) miteinander verschmolzen werden. Ferner bezieht sich die Erfindung auf eine Vorrichtung zur Durchführung des Verfahrens.

Es ist bekannt, metallische Bauteile, wie eine Achse mit Hilfe der Lasertechnik mit einer Metallplatte zu verschweißen. Eine besondere Qualitätsanforderung kann darin bestehen, das Bauteil in der Basisplatte in einer genau geforderten Richtung in x-, y- und z-Richtung sauber festzuschweißen. Verläuft die z-Richtung senkrecht zur Ebene der Basisplatte, dann hat man versucht, die genaue Orientierung durch das Einziehen einer Düse in die Basisplatte zu erreichen. In die Düsenöffnung wird dann das zu befestigende Bauteil eingesteckt, und mit der Lasertechnik werden der Düsenrand und das Bauteil miteinander verschweißt.

Es hat sich gezeigt, daß diese Verschweißtechnik unbefriedigend und fehlerhaft ist. Häufig sind die Schweißergebnisse so schlecht, daß ein Nachschweißen erforderlich wird.

Aus der DE 27 50 352 A1 ist es bekannt, an zu verschweißenden Stellen an einem beschichteten Teil eine Abkantung vorzusehen, um Auflageschichten zu entfernen. Derartige Abkantungen sind zusätzliche Arbeitsschritte, die keinen Einfluß auf die Lageorientierung einer einzuschweißenden Welle nehmen.

Es ist Aufgabe der Erfindung, ein Verfahren zum Befestigen eines Gerätebauteiles in oder an einer metallischen Basisplatte zu schaffen, bei dem eine sichere und genau orientierte Verschweißung in einem Arbeitsgang möglich ist.

Die gestellte Aufgabe ist erfindungsgemäß dadurch gelöst, daß in das Loch, in dem das Bauteil in der x-, y- und z-Achse der Basisplatte genau orientiert festgesetzt werden soll, zunächst in der exakten x-, y- und z-Orientierung zur Basisplatte ein Stempel eingeführt wird, daß der Lochrand an mehreren über die 360 Winkelgrad des Lochrandes verteilten Lochrandstellen in Stempel- bzw. z-Achsrichtung hochgedrückt wird, wodurch eine Schutzschicht auf der Basisplatte vor dem Verschmelzvorgang durch diese mechanische Deformation im Verschmelzbereich derart aufgebrochen bzw. entfernt wird, daß das blanke Metall im Verschmelzbereich freigelegt wird, daß der Stempel gegen das zu befestigende Bauteil ausgetauscht wird und daß dann das dem Aufschmelzen dienende Licht unmittelbar auf das freigelegte Metall auftrifft, dieses aufschmilzt und mit dem gleichfalls aufgeschmolzenen Oberflächenbereich des Bauteiles verschmilzt zwischen den ausgedrückten Stützen an den Lochrandstellen und dem Bauteil.

Durch das Aufbrechen der Schutzschicht und damit Freilegen des Metalles der Basisplatte sind die Schmelz- und Verschmelzprobleme beseitigt.

Der Stempel garantiert mit seiner Orientierung und Formgebung die exakte Ausbildung und Anlage der Stützen am Stempel sicher. Wird dann der Stempel gegen die Achse ausgetauscht, dann kann das Laserlicht das reine Plattenmaterial, das durch das Ausdrücken freigelegt wird, mit der Achse sicher verschweißen.

Das Auflösen einer Düse in mehrere Einzelstützen, die für sich getrennt verformt werden, garantiert eine genaue Achsorientierung zwischen den einzelnen Stützen.

Zur Durchführung des Verfahrens ist eine Vorrichtung vorgesehen, die gekennzeichnet ist durch Matrizen, die von beiden Seiten derart auf die Basisplatte aufsetzbar sind, daß sie das Umfeld des Loches unter Freilassung des Loches abdecken, und einen Stempel, der in einer Deformierungsrichtung von der ersten Matrize passend durch das Loch der Basisplatte in die zweite Matrize einfahrbar ist, wobei der Stempel im Abstand von seinem Kopfende radial vorstehende Schultern aufweist, die in Führungen der ersten Matrize geführt sind und beim Einfahren des Stempels nur bis in den Bereich der Basisplatte vorstoßen, und wobei in der zweiten Matrize in Verlängerung der Einfahrrichtung der Schultern die Stützen formende Kammern vorgesehen sind, in die das von den Schultern verdrängbare, die Stützen bildende Plattenmaterial eindrückbar ist. Der Stempel und die ausdrückenden Teile bestehen also aus einem Stück und werden damit gemeinsam bewegt.

Eine weiterer Vorteil der Stützenbildung innerhalb der zweiten Matrize besteht darin, daß Reibung an den Wänden der Ausnehmungen zusätzlich zu einem Abtragen von Schutzschichtmaterial führt, so daß das Metall der Basisplatte im Bereich der Stützen verstärkt freigelegt wird.

Die Erfindung wird anhand der Zeichnung näher erläutert.

Es zeigen:
Fig. 1 im Schnitt einen Ausschnitt aus einer metallischen Basisplatte mit einem Loch, in dem eine Achse befestigt werden soll,
Fig. 2 im Schnitt die Basisplatte, die beiderseits flankiert ist von Matrizen, die das Loch in der Basisplatte umgeben, sowie einen Stempel, der in das Loch der Basisplatte und entsprechende Löcher der Matrizen hineingefahren ist,
Fig. 3 im Schnitt die rings um das Loch der Basisplatte verformte Basisplatte,
Fig. 4 eine Draufsicht auf den Schnitt nach Fig. 3,
Fig. 5 eine in der Basisplatte befestigte Achse oder Lagerbuchse im Schnitt und
Fig. 6 eine Draufsicht auf den Schnitt nach Fig. 5.

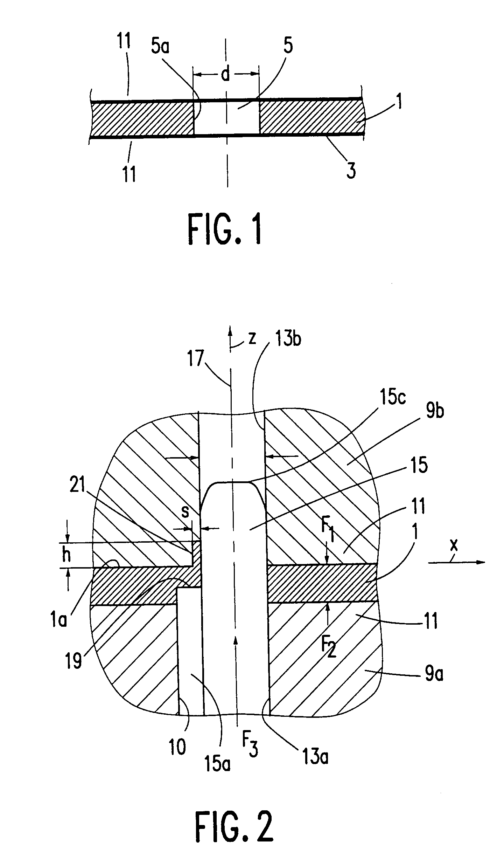

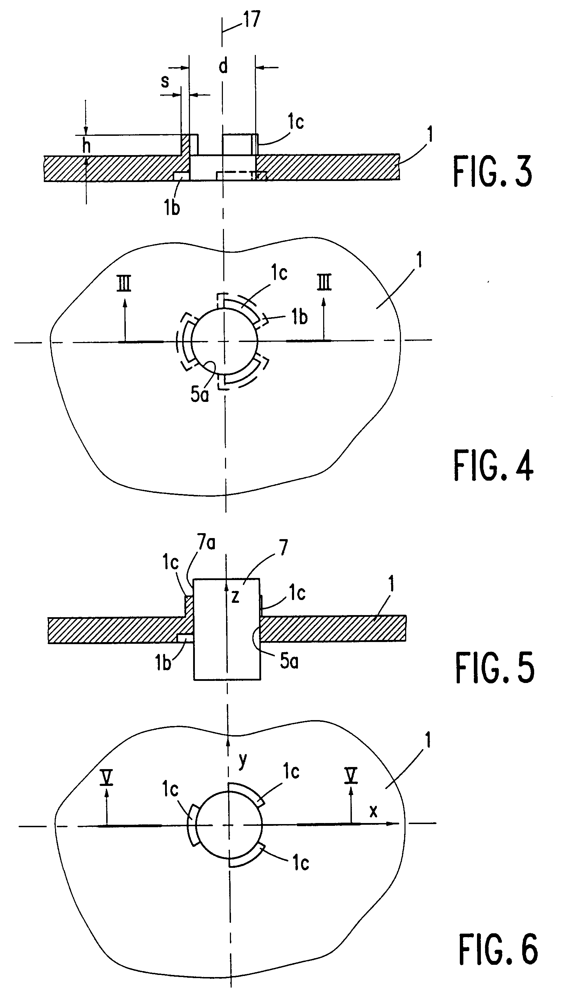

Fig. 1 zeigt einen Ausschnitt aus einer Basisplatte 1, die aus Stahlblech besteht und an der Oberfläche eine Schutzschicht 3, beispielsweise aus Zink, aufweist. In der Basisplatte 1 befindet sich ein Loch 5, das einen Durchmesser d aufweist. In dem Loch 5 soll ein Gerätebauteil, eine in Fig. 5 und 6 erkennbare Achse 7 oder auch eine Lagerbuchse, befestigt werden, wobei eine genau Vorgabe der Lage der Achse 7 in der x-, y- und z-Richtung gegeben sein soll. Die Achse 7 soll durch ein Verschweißen in Lasertechnik mit der Basisplatte 1 verbunden werden.

Um das einwandfreie Verschweißen in Lasertechnik möglich zu machen, werden an dem Loch 5 bzw. dem Lochrand 5a Vorbereitungen vorgenommen.

Wie Fig. 2 zeigt, werden beiderseits der Basisplatte 1 eine erste Matrize 9a und eine zweite Matrize 9b angeordnet. Die Matrizen 9a und 9b drücken mit Kräften F₁ und F₂ von beiden Seiten gegen das Umfeld 11 des Loches 5.

Fluchtend mit dem Loch 5 sind in den Matrizen 9a und 9b Durchbrüche 13a, 13b vorgesehen, deren Durchmesser dem Durchmesser d des Loches 5 entsprechen. In die Durchbrüche 13a, 13b und dementsprechend auch in das Loch 5 ist ein Stempel 15 einfahrbar, dessen Wandgestaltung der Gestaltung des Loches 5 und der Durchbrüche 13a und 13b entspricht. Die Einfahrrichtung 17 des Dornes 15, die mit der Mittellinie von Loch 5 und Durchbrüchen 13a und 13b fluchtet und zusammenfällt, verläuft von der Matrize 9a durch die Basisplatte 1 in die Matrize 9b. Die Kraft, mit der der Stempel 15 in den Durchbruch 13a eingefahren wird, ist mit F₃ bezeichnet. Die Einfahrrichtung 17 ist genau in der z-Richtung orientiert, die senkrecht zur x-y-Ebene der Basisplatte 1 verläuft (Fig. 6).

In der Matrize 9a sind radial auswärts weisende Führungsnuten 10 vorgesehen, in die radiale Rippen 15a des Stempels 15 führbar ist. Die Rippen 15a enden an Schultern 19. Die Schultern befinden sich in einem Abstand vom Stempelkopf 15. Von derartigen Rippen 15a sind um den Stempelumfang mit seinen 360 Winkelgraden jeweils bei 120° eine Rippe 15a passend zu Führungsnuten 17 vorgesehen.

In der Matrize 9b befinden sich in Verlängerung der Rippen 15a Kammern 21. Die Kammern haben von dem Lochrand 5a eine radiale Tiefe s und von der Oberfläche 1a der Basisplatte eine Höhe h.

Wird nun der Stempel 15 mit der Kraft F₃ in die Matrize 9a und weiter in die Basisplatte 1 etwa bis zu deren halbem Durchmesser eingedrückt, dann fließt das verdrängte Material an diesen Lochrandstellen der Basisplatte 1 in die Kammern 21 ein.

Fig. 3 zeigt, daß sich dabei in der Basisplatte 1 Vertiefungen 1b ausbilden, die von den Schultern 19 eingeformt wurden, und in den Kammern 21 befinden sich nun Stützen 1c, deren Abstand von der Mittellinie 17 jeweils gleiche Abstände haben.

Der Vorteil der durch Verformen des Materials der Metallplatte so gebildeten Stützen 1c besteht darin, daß infolge des Verformungsvorganges die evtl. Schutzschicht 3 aufgebrochen wurde, so daß das blanke Metall freiliegt. Die Orientierung der Stützen 1c entspricht genau der Orientierung, die der Stempel 15 vorgegeben hat. Wird nun, wie Fig. 5 zeigt, in das Loch 5 mit dem Lochrand 5a die Achse 7 hindurchgeschoben, dann besteht metallischer Kontakt zwischen der Oberfläche der Achse 7 und den Stützen 1c. Mit Hilfe der Lasertechnik können nun Bereiche der Stützen 1c und der Wandung 7a der Achse 7 aufgeschmolzen und miteinander verschmolzen werden.

Ein weiterer Vorteil ist die exakte 90°-Stellung der Aufnahmebohrung zur Oberfläche sowie die Herstellung der Befestigungslippen in einer Stärke, die dem Gegenstück (Achse oder Lagerbuchse) entspricht. Schweißtechnischen Erfordernissen wird dadurch besser nachgekommen.

## Patentansprüche

1. Verfahren zum Befestigen eines Gerätebauteiles in einem Loch (5) einer metallischen Basisplatte (1), wobei aneinander grenzende Randbereiche (5a, 5b) des Bauteiles (7) und des Loches (5), in dem das Bauteil (7) in der x-, y- und z-Achse der Basisplatte genau orientiert festgesetzt werden soll, durch Aufschmelzen von benachbarten Materialbereichen von Basisplatte (1) und Bauteil (7) mittels eines Strahles parallel gebündelten Lichtes miteinander verschmolzen werden, dadurch gekennzeichnet, daß in das Loch (5) zunächst in der exakten x-, y- und z-Orientierung zur Basisplatte (1) ein Stempel (15) eingeführt wird, daß der Lochrand (5a) an mehreren über die 360 Winkelgrad des Lochrandes (5a) verteilten Lochrandstellen in Stempel- bzw. z-Achserichtung hochgedrückt wird, wodurch eine Schutzschicht (3) auf der Basisplatte (1) vor dem Verschmelzvorgang durch diese mechanische Deformation im Verschmelzbereich derart aufgebrochen bzw. entfernt wird, daß das blanke Metall im Verschmelzbereich freigelegt wird, daß der Stempel (15) gegen das zu befestigende Bauteil (7) ausgetauscht wird und daß dann das dem Aufschmelzen dienende Licht unmittelbar auf das freigelegte Metall auftrifft, dieses aufschmilzt und mit dem gleichfalls aufgeschmolzenen Oberflächenbereich (7a) des Bauteiles (7) verschmilzt zwischen den ausgedrückten Stützen (21) an den Lochrandstellen und dem Bauteil (7).

2. Vorrichtung zur Durchführung des Verfahrens nach Anspruch 1, umfassend Matrizen (9a, 9b), die von beiden Seiten derart auf die Basisplatte (1) aufsetzbar sind, daß sie das Umfeld (11) des Loches (5) unter Freilassung des Loches (5) abdecken, und einen Stempel (15), der in einer Deformierungsrichtung von der ersten Matrize (9a) passend durch das Loch (5) der Basisplatte (1) in die zweite Matrize (9b) einfahrbar ist, wobei der Stempel (15) im Abstand von seinem Kopfende (15c) radial vorstehende Schultern (19) aufweist, die in Führungen (10) der ersten Matrize (9a) geführt sind und beim Einfahren des Stempels (15) nur bis in den Bereich der Basisplatte (1) vorstoßen, und wobei in der zweiten Matrize (9b) in Verlängerung der Einfahrrichtung (17) der Schultern (19) die Stützen (1c) formende Kammern (21) vorgesehen sind, in die das von den Schultern (19) verdrängbare, die Stützen (1c) bildende Plattenmaterial eindrückbar ist.

## Claims

1. A method of securing an apparatus part in a hole (5) in a metal base plate (1), adjoining peripheral areas (5a, 7a) of the part (7) and of the hole (5), in which the part (7) is to be secured in a precise orientation relative to the x, y and z axes of the base plate, being fused to one another by melting adjoining material portions of the base plate (1) and the part (7) by means of a parallel beam of coherent light, characterised in that a mandril (15) is first introduced into the hole (5) in the exact x, y and z orientation relative to the base plate (1), in that the edge (5a) of the hole is upset in the mandril direction or z-axis direction at a plurality of peripheral areas of the hole which are equispaced along the 360 angular degrees of the edge (5a) of the hole, as a result of which a protective layer (3) on the base plate (1) is broken up or removed by mechanical deformation in the fusing area prior to fusing, so as to expose the bare metal in the fusing area, in that the mandril (15) is replaced by the part (7) to be secured, and in that the light which serves for fusing then impinges directly on the exposed metal, melts this metal and fuses with the equally molten surface area (7a) of the part (7) between the supports (1c) formed by upsetting at the peripheral areas of the hole and the part (7).

2. A device for carrying out a method as claimed in Claim 1, comprising dies (9a, 9b) which are applicable to the base plate (1) from both sides in such a manner that they cover the peripheral area (11) of the hole while leaving the hole (5) free, and a mandril (15) which is introducible in a deformation direction from the first die (9a) into the second die (9b) through the hole (5) in the base plate (1) with a proper fit, the mandril (15) having radially projecting shoulders (19) which are spaced from the mandril head (15c), which shoulders are engageable in grooves (10) of the first die (9a) and during introduction of the mandril (15) only move into the area of the base plate (1), the second die (9b) having chambers (21) in line with the direction of introduction (17) of the shoulders (19), into which chambers the sheet material which is displaceable by the shoulders (19) can be pressed to form the supports (1c).

## Revendications

1. Procédé de fixation d'un composant d'appareil dans un orifice (5) d'une plaque de base métallique (1), des régions des bords (5a, 5b) adjacentes du composant (7) et de l'orifice (5) dans lequel le composant (7) doit être fixé avec une orientation précise par rapport aux axes x, y et z de la plaque de base par fusion de zones voisines du matériau de la plaque de base (1) et du composant (7) à l'aide d'un faisceau de lumière focalisé parallèlement, caractérisé en ce qu'un poinçon (15) est introduit dans l'orifice (5), initialement dans l'orientation x, y et z exacte par rapport à la plaque de base (1), que le bord de l'orifice (5a) est comprimé à plusieurs endroits du bord de l'orifice répartis sur les 360 degrés du bord de l'orifice (5a) dans la direction du poinçon ou de l'axe z, une couche de protection (3) sur la plaque de base (1) étant érodée ou éliminée avant l'opération de fusion par cette déformation mécanique dans la zone de fusion, que le métal blanc est dégagé dans la zone de fusion, que le poinçon (15) est échangé contre le composant (7) à fixer et que la lumière servant à la fusion touche par conséquent directement le métal dégagé, le fait fondre et le fusionne avec la zone de surface (7a) du composant (7) également fondue entre les appuis exprimés (21) contre les endroits du bord de l'orifice et le composant (7).

2. Dispositif d'exécution du procédé selon la revendication 1, comprenant des matrices (9a, 9b) qui peuvent être placées de part et d'autre sur la plaque de base (1) de telle sorte qu'elles recouvrent la périphérie (11) de l'orifice (5) en libérant l'orifice (5) et un poinçon (15) qui peut être introduit dans un sens de déformation de la première matrice (9a) en passant par l'orifice (5) de la plaque de base (1) dans la deuxième matrice (9b), le poinçon (15) présentant à une distance par rapport à son extrémité de tête (15c) des épaulements (19) faisant saillie radialement qui sont guidés dans des glissières (10) de la première matrice (9a) et ne butent que jusque dans la zone de la plaque de base (1) lors de l'introduction du poinçon (15) et des compartiments (21) formant les appuis (1c) étant prévus dans la deuxième matrice (9b) dans le prolongement du sens d'introduction (17) des épaulements (19), compartiments dans lesquels le matériau en plaque formant les appuis (1c) et refoulable par les épaulements (19) peut être enfoncé.
